# FASCICULE DE BREVET EUROPEEN

(11) **EP 4 258 749 B1**
(45) Date de publication et mention de la délivrance du brevet: **15.07.2026**
(21) Numéro de dépôt: 23166131.5
(22) Date de dépôt: 31.03.2023
(51) Int. Cl.: H04W 48/20, H04L 12/28, H04W 12/50, H04W 12/73, H04W 84/12

(54) **PROCÉDÉ D'AJOUT D'UN OBJET COMMUNICANT À UN RÉSEAU DE COMMUNICATION SANS FIL**
VERFAHREN ZUM HINZUFÜGEN EINES KOMMUNIZIERENDEN OBJEKTS ZU EINEM DRAHTLOSEN KOMMUNIKATIONSNETZWERK
METHOD FOR ADDING A COMMUNICATING OBJECT TO A WIRELESS COMMUNICATION NETWORK

(30) Priorité: 08.04.2022 FR 2203239
(43) Date de publication de la demande: 11.10.2023
(73) Titulaire: Orange, 92130 Issy-les-Moulineaux (FR)
(72) Inventeur: L'HEREEC, Kévin, 92326 CHATILLON (FR); RUFFIN, Arnaud, 92326 CHATILLON (FR)
(74) Mandataire: Vidon Brevets & Stratégie

(56) Documents cités:
- EP-A1- 3 468 244
- CN-A- 107 466 055
- US-A1- 2015 251 102
- US-A1- 2021 329 715
- US-A1- 2022 021 554
- CAI XUEJUN ET AL: "Design and implementation of a WiFi sensor device management system", 2014 IEEE WORLD FORUM ON INTERNET OF THINGS (WF-IOT), IEEE, 6 March 2014 (2014-03-06), pages 10 - 14, XP032589816, DOI: 10.1109/WF-IOT.2014.6803108

## Description

### Domaine technique

L'invention se situe dans le domaine de l'Internet des objets. Plus particulièrement, l'invention se rapporte aux techniques permettant d'ajouter un objet communicant à un réseau local de communication sans fil existant, par exemple un réseau WiFi.

### Art antérieur

Le marché des objets communicants - c'est-à-dire des objets disposant de moyens de connexion à un réseau de communication, par exemple un réseau local et/ou le réseau Internet - est en plein essor. Ce marché est notamment porté par le domaine de la domotique, les utilisateurs disposant maintenant d'une grande variété d'objets communicants (prises connectées, ampoules connectées, volets roulants connectés, caméras connectées, enceintes connectées, radiateurs connectés, détecteurs de fumée connectés, etc.) qu'ils peuvent ajouter au réseau local de leur habitation afin de pouvoir contrôler ces équipements à distance (via l'intermédiaire d'un smartphone ou d'une tablette par exemple), les faire communiquer entre eux, les intégrer à des scénarii automatisés, recevoir des notifications d'alerte, etc. Cette intégration croissante d'objets communicants au sein de l'habitat, le plus souvent reliés au réseau Internet, s'inscrit dans le concept de « maison intelligente » (ou « maison connectée »), et permet de répondre à de nombreuses aspirations des utilisateurs, en termes de confort, de sécurité, d'économie d'énergie, etc.

Parmi les objets communicants disponibles sur le marché, un grand nombre repose sur des protocoles de communication sans fil, notamment des protocoles selon la norme IEEE 802.11 (i.e. la technologie WiFi), pour permettre leur connexion au réseau. Ceci s'explique par le fait que les réseaux sans fil, tel que des réseaux sans fils WiFi sont largement déployés dans un très grand nombre de réseaux locaux et domestiques, du fait de leur simplicité d'utilisation (connexion des équipements sans câble) associée à la démocratisation au sein des foyers de passerelles (par exemple sous la forme de « set-top box ») intégrant par défaut ces technologies.

Toutefois, si l'utilisation d'un objet communicant connecté à un réseau sans fils est généralement simple et intuitive au quotidien, elle reste conditionnée à la mise en œuvre au préalable d'une étape d'ajout de cet objet communicant au réseau existant. Ce processus - parfois également qualifié d'appairage- consiste à fournir à l'objet communicant, avant sa première utilisation, les informations lui permettant de se connecter au réseau de l'utilisateur, généralement fourni par une passerelle domestique. Ces informations de connexion comprennent typiquement le nom du réseau auquel l'objet communicant doit se connecter et, dans la plupart des cas, un mot de passe associé dont la connaissance est requise par la passerelle pour autoriser la connexion. Or un grand nombre d'objets communicants actuels est dépourvu de clavier ou d'écran, et ne dispose donc pas de moyens permettant de saisir ces informations de connexion. Aussi, l'utilisateur doit généralement avoir recours à une application dédiée installée sur un terminal de communication plus sophistiqué, par exemple un smartphone, afin de saisir ces informations et les transmettre à l'objet communicant.

Comme expliqué ci-après, de telles opérations peuvent cependant s'avérer parfois complexes et peu intuitives à mettre en œuvre pour un utilisateur non averti, notamment pour le grand-public qui constitue pourtant le cœur de cible de ces produits.

En premier lieu, la saisie manuelle des informations de connexion sur le terminal de communication de l'utilisateur est souvent fastidieuse et source d'erreurs, ce qui peut engendrer une certaine frustration de la part de l'utilisateur.

En deuxième lieu, même lorsque ces informations ont été correctement saisies par l'utilisateur dans l'application dédiée à cette fin, leur transmission du terminal de communication à l'objet communicant peut s'avérer plus complexe que prévu, et nécessiter que l'utilisateur effectue certaines opérations de paramétrage de son terminal de communication et/ou de la passerelle fournissant le réseau WiFi. Dans une telle situation, l'utilisateur n'a généralement pas d'autres choix que de sortir de l'application dédiée d'ajout d'un objet communicant au réseau, pour aller naviguer dans les écrans d'administration de la passerelle et/ou dans les écrans systèmes de paramétrage de son terminal de communication, afin de modifier au moins provisoirement la configuration de ces équipements le temps de l'appairage.

Il va de soi que de telles manipulations constituent un cheminement complexe et peu intuitif pour la plupart des utilisateurs. Non seulement l'expérience utilisateur est dégradée, mais il existe de plus un risque accru que l'utilisateur effectue des choix de paramétrages incorrects de son terminal de communication ou de sa passerelle, susceptibles d'en compromettre le bon fonctionnement.

Des solutions ont été développées pour tenter de faciliter le processus d'appairage d'un objet communicant WiFi à un réseau WiFi (e.g. WPS pour « Wi-Fi Protected Setup », « Easy Connect^{™} », transmission des informations de connexion via Bluetooth). Toutes ces solutions existantes imposent cependant une conception spécifique de l'objet communicant WiFi (par exemple la présence d'interfaces de communication supplémentaires en plus de l'interface WiFi, et/ou la prise en charge de protocoles de communication autres que le protocole WiFi), afin qu'il soit compatible avec les techniques d'appairage proposées. Ces solutions ne sont donc pas universelles, et impliquent de surcroit une augmentation des coûts de production des objets communicants qui les intègrent.

Il existe donc un besoin pour une solution universelle permettant de simplifier le parcours utilisateur lors de l'ajout d'un nouvel objet communicant WiFi à un réseau WiFi existant.

Le document US 2021/329715 A1 se rapporte à des techniques permettant de faciliter la connexion d'un appareil électroménager intelligent (par exemple d'une machine à laver) à un réseau domestique sans-fil, typiquement un réseau WiFi, fourni par un point d'accès; un terminal exécute une application dédiée pour effectuer une installation WiFi de l'appareil électroménager.. Le document EP 3 468 244 A1 se situe dans un contexte dans lequel plusieurs points d'accès à des réseaux sans-fil sont disponibles pour la connexion d'un terminal de communication, et se rapporte plus particulièrement à une technique permettant au terminal de communication d'adapter son niveau de puissance en émission en fonction du point d'accès auquel il souhaite se connecter parmi la pluralité de point d'accès disponibles.

### Résumé de l'invention

La présente technique permet de proposer une solution visant à remédier à certains inconvénients de l'art antérieur. Selon un aspect, la présente technique se rapporte en effet à un procédé d'ajout d'un objet communicant à un réseau local de communication sans fil fourni par une passerelle, ledit procédé étant mis en œuvre au sein d'une application dédiée exécutée sur un terminal de communication connecté audit réseau via ladite passerelle. Ce procédé comprend :
- l'émission, à destination de ladite passerelle, d'une requête d'obtention d'au moins une information de connexion audit réseau ;
- la réception, en provenance de ladite passerelle de ladite au moins une information de connexion audit réseau ;
- la transmission, audit objet communicant, de ladite au moins une information de connexion audit réseau.

De cette manière, l'obtention des informations de connexion à communiquer à l'objet communicant pour que celui-ci puisse se connecter au réseau local de communication sans fil est effectuée de manière automatique, ces informations étant récupérées directement auprès de la passerelle, sur requête du terminal de communication. L'utilisateur n'a donc plus besoin de saisir manuellement ces informations sur son terminal de communication lors d'une opération fastidieuse et source d'erreurs. L'ajout de l'objet communicant au réseau de communication sans fil est ainsi simplifié, et l'expérience utilisateur améliorée.

Dans un mode de réalisation particulier, le procédé comprend, préalablement à ladite transmission, une étape d'émission, à destination de ladite passerelle, d'au moins une requête de mise en œuvre par ladite passerelle d'au moins une opération parmi une opération de désactivation de fréquence et une opération de balayage en fréquence, ladite requête comprenant au moins une information de bande de fréquences concernée par ladite opération.

De cette manière, la technique proposée permet, sans quitter l'application dédiée à l'ajout d'un objet communicant au réseau de communication sans fil, de requérir de la passerelle qu'elle mette en œuvre une opération destinée à favoriser la transmission des informations de connexion obtenues par le terminal de communication à l'objet communicant. Ainsi, la passerelle est sollicitée pour mettre en œuvre une opération de désactivation de fréquence et/ou de balayage en fréquence permettant de favoriser la sélection d'une bande de fréquences appropriée pour cette transmission, soit par désactivation des bandes de fréquences inappropriées pour une telle transmission, soit par transmission au terminal de communication d'une information lui permettant de détecter plus facilement l'objet communicant dans une bande de fréquences appropriée pour cette transmission.

Selon une caractéristique particulière, ladite requête d'obtention d'au moins une information de connexion au réseau, ladite requête de mise en œuvre d'une opération de désactivation de fréquence, et ladite requête de mise en œuvre d'une opération de balayage en fréquence sont respectivement formatées conformément à une première, une deuxième et une troisième interfaces de programmation applicative exposées par ladite passerelle pour la fourniture de services correspondants audit terminal de communication.

De cette manière, la sollicitation de la passerelle par le terminal de communication est cadrée et sécurisée. Seuls certains services bien identifiés sont proposés et mis à disposition de dispositifs tiers par la passerelle, par le biais d'interfaces de programmation applicative correspondantes. Ainsi, l'accès à ces services requiert que ces dispositifs tiers soient d'une part connectés au réseau de communication fourni par la passerelle, et qu'ils connaissent d'autre part les modalités d'accès à ces services, c'est-à-dire le formalisme ou la manière d'interroger la passerelle via des requêtes idoines permettant d'y accéder.

Dans un mode de réalisation particulier, ladite transmission est mise en œuvre par diffusion desdites informations de connexion, et ledit procédé comprend, préalablement à ladite transmission, l'émission, à destination de ladite passerelle, d'une requête de désactivation d'au moins une première bande de fréquence au niveau de ladite passerelle, ladite désactivation entrainant une bascule automatique dudit terminal de communication dans un mode de communication utilisant une deuxième bande de fréquence autre que ladite au moins une première bande de fréquence désactivée au niveau de ladite passerelle, pour ladite transmission par diffusion.

De cette manière, il est possible, sans quitter l'application d'ajout d'un objet communicant et de manière automatique, de forcer le terminal de communication à communiquer dans une bande de fréquences supportée par l'objet communicant pour la transmission des informations de connexion. On évite ainsi à l'utilisateur d'avoir à réaliser, préalablement à une telle transmission, des modifications manuelles et risquées de la configuration de la passerelle via des interfaces d'administration souvent très techniques et absconses. L'ajout de l'objet communicant au réseau de communication sans fil est ainsi encore simplifié, et l'expérience utilisateur encore améliorée.

Selon une caractéristique particulière de ce mode de réalisation, ladite requête de désactivation d'au moins une première bande de fréquence est une requête de désactivation d'au moins une parmi les bandes de fréquences 5 GHz et 6 GHz.

De cette manière, les bande de fréquences sur lesquelles un objet communicant est le moins susceptible d'être en mesure de communiquer sont désactivées, entrainant *de facto* une bascule du terminal de communication dans la bande de fréquences 2,4 GHz majoritairement utilisée par la plupart des objets communicants disponibles sur le marché.

Selon une caractéristique particulière de ce mode de réalisation, le procédé comprend, postérieurement à ladite transmission, l'émission, à destination de ladite passerelle, d'une requête de réactivation, au niveau de ladite passerelle, de ladite au moins une première bande de fréquence précédemment désactivée.

De cette manière, la configuration initiale de la passerelle est rétablie une fois l'ajout de l'objet communicant au réseau de communication sans fil finalisé.

Dans un autre mode de réalisation particulier, ladite transmission desdites informations de connexion est mise en œuvre au moyen d'un canal de communication direct établi entre ledit terminal de communication et ledit objet communicant préalablement configuré en tant que point d'accès, et ledit procédé comprend, préalablement à ladite transmission :
- l'émission, à destination de ladite passerelle, d'une requête de balayage réseau ;
- la réception, en provenance de ladite passerelle, d'une liste de réseaux détectés par ladite passerelle au cours dudit balayage réseau ;
- la sélection, au sein de ladite liste, d'un réseau correspondant au réseau associé audit objet communicant configuré en tant que point d'accès ;
- l'établissement dudit canal de communication direct entre ledit terminal de communication et ledit objet communicant, par connexion du terminal de communication audit réseau sélectionné.

De cette manière l'identification du réseau de communication sans fil fourni par l'objet communicant configuré en tant que point d'accès est facilitée, et la connexion du terminal de communication à ce réseau est mise en œuvre directement depuis l'application dédiée d'ajout d'un objet communicant à un réseau de communication sans fil, sans que l'utilisateur ait besoin d'aller naviguer dans les écrans natifs et les paramètres systèmes du terminal de communication. L'ajout de l'objet communicant au réseau de communication sans fil est ainsi encore simplifié, et l'expérience utilisateur encore améliorée.

Selon une caractéristique particulière de ce mode de réalisation, ladite requête de balayage réseau comprend une information de bande de fréquences à utiliser pour ledit balayage réseau.

De cette manière, il est possible de limiter la liste des réseaux détectés aux réseaux ayant une plus grande probabilité de correspondre à un réseau généré par un objet communicant. On facilite ainsi encore plus l'identification du réseau de communication sans fil fourni par l'objet communicant configuré en tant que point d'accès.

Selon une caractéristique particulière de ce mode de réalisation, le procédé comprend l'identification, au sein de ladite liste de réseaux détectés, d'au moins un réseau dont le nom satisfait aux critères d'un masque de nom prédéterminé stocké dans ladite application dédiée ; et, lorsque ladite d'identification délivre un unique résultat, la sélection automatique dudit réseau identifié de manière unique.

De cette manière, l'identification du réseau de communication sans fil fourni par l'objet communicant configuré en tant que point d'accès, puis la connexion du terminal de communication à ce réseau, peuvent être effectuées de manière complètement automatique et transparente pour l'utilisateur. L'ajout de l'objet communicant au réseau de communication sans fil est ainsi encore simplifié, et l'expérience utilisateur encore améliorée.

Selon une caractéristique particulière de ce mode de réalisation, ladite liste comprend une valeur indicative de niveau de puissance en réception associée à chaque réseau détecté.

De cette manière, la distance d'un objet communicant à la passerelle peut être estimée et utilisée pour faciliter encore l'identification du réseau de communication sans fil fourni par l'objet communicant configuré en tant que point d'accès.

Selon une caractéristique particulière de ce mode de réalisation, lesdites étapes d'émission d'une requête de balayage réseau et de réception d'une liste de réseaux en réponse à ladite requête de balayage sont mises en œuvre au moins deux fois, et le procédé comprend :
- l'affichage, entre deux itérations desdites étapes d'émission d'une requête de balayage réseau et de réception d'une liste de réseaux en réponse à ladite requête de balayage, d'une invitation à éloigner ou approcher ledit objet communicant de ladite passerelle ;
- la comparaison, pour chaque réseau détecté, des valeurs indicatives de niveau de puissance en réception obtenues lors de chacune desdites itérations ;
- la sélection automatique ou mise en évidence au sein d'une interface graphique associée à ladite application, parmi la liste de réseaux détectés, en fonction du résultat de ladite comparaison, d'un réseau ayant la plus forte probabilité de correspondre au réseau fourni par ledit objet communicant configuré en tant que point d'accès.

De cette manière la valeur indicative de niveau de puissance en réception peut être utilisée en tant que mécanisme de lever de doute, pour faciliter l'identification du réseau de communication sans fil fourni par l'objet communicant configuré en tant que point d'accès, simplement en rapprochant ou en éloignant l'objet communicant de la passerelle.

Selon une autre caractéristique particulière de ce mode de réalisation, l'émission d'une requête de balayage réseau et la réception d'une liste de réseaux en réponse à ladite requête de balayage sont mises en œuvre au moins deux fois, et le procédé comprend :
- l'affichage, entre deux itérations desdites étapes d'émission d'une requête de balayage réseau et de réception d'une liste de réseaux en réponse à ladite requête de balayage, d'une invitation à basculer ledit objet communicant en configuration point d'accès ;
- la comparaison des listes de réseaux détectés lors de chacune desdites itérations ;
- sélection automatique ou mise en évidence au sein d'une interface graphique associée à ladite application, parmi la liste de réseaux détectés, en fonction du résultat de ladite comparaison, d'un réseau ayant la plus forte probabilité de correspondre au réseau fourni par ledit objet communicant configuré en tant que point d'accès.

De cette manière le mode de configuration de l'objet communicant peut également être utilisé en tant que mécanisme de lever de doute, pour faciliter l'identification du réseau de communication sans fil fourni par l'objet communicant configuré en tant que point d'accès, simplement en basculant l'objet communicant d'un mode de configuration dans lequel il n'est pas encore configuré comme point d'accès à un mode de configuration dans lequel il est configuré comme point d'accès.

Selon un autre aspect, la présente technique se rapporte également à un terminal de communication pour la mise en œuvre d'un ajout d'un objet communicant à un réseau local sans fil fourni par une passerelle. Un tel terminal de communication comprend :
- des moyens d'émission, à destination de ladite passerelle, d'une requête d'obtention d'au moins une information de connexion audit réseau ;
- des moyens de réception, en provenance de ladite passerelle de ladite au moins une information de connexion audit réseau ;
- des moyens de transmission, audit objet communicant, de ladite au moins une information de connexion audit réseau.

Les moyens dudit terminal peuvent être adaptés à la mise en œuvre l'un quelconque des modes de réalisation du procédé de la présente demande.

Selon encore un autre aspect, la présente technique se rapporte également à une passerelle pour la fourniture d'un réseau local sans fil, ladite passerelle comprenant un ensemble d'interfaces de programmation applicative pour la fourniture d'au moins un service à un terminal de communication connecté audit réseau via ladite passerelle, sur requête dudit terminal de communication, dit terminal requérant, ledit ensemble d'interfaces de programmation applicative comprenant :
- une première interface de programmation applicative d'obtention d'au moins une information de connexion audit réseau, et de fourniture desdites informations de connexion audit terminal requérant ;
- une deuxième interface de programmation applicative de désactivation/réactivation d'au moins une bande de fréquence au niveau de ladite passerelle ;
- une troisième interface de programmation applicative de mise en œuvre d'un balayage réseau et de fourniture audit terminal requérant d'une liste de réseaux détectés durant ledit balayage réseau.

Ainsi, la passerelle pour la fourniture d'un réseau de communication sans fil comprend des moyens qui peuvent être utilisés par un terminal de communication pour simplifier l'ajout d'un objet communicant audit réseau, sans nécessiter de conception spécifique de l'objet communicant pour la mise en œuvre d'un tel ajout simplifié.

Selon un autre aspect, la technique proposée se rapporte également à un produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé d'ajout d'un objet communicant à un réseau de communication sans fil tel que décrit précédemment, lorsqu'il est exécuté sur un ordinateur.

La technique proposée vise également un support d'enregistrement lisible par un ordinateur sur lequel est enregistré un programme d'ordinateur comprenant des instructions de code de programme pour l'exécution des étapes du procédé tel que décrit précédemment, dans l'un quelconque de ses modes de réalisation.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par exemple le réseau Internet.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
[Fig 1] illustre le principe général d'un procédé d'ajout d'un objet communicant à un réseau de communication sans fil, dans un mode de réalisation particulier de la technique proposée ;
[Fig 2] présente un diagramme de séquence d'un mode de réalisation particulier du procédé d'ajout d'un objet communicant à un réseau de communication sans fil selon la technique proposée ;
[Fig 3] présente un diagramme de séquence d'un autre mode de réalisation particulier du procédé d'ajout d'un objet communicant à un réseau de communication sans fil selon la technique proposée ;
[Fig 4] décrit une architecture simplifiée d'un terminal de communication pour la mise en œuvre de la technique proposée, dans un mode de réalisation particulier ;
[Fig 5] présente un schéma simplifié d'une passerelle pour la fourniture d'un réseau de communication sans fil, dans un mode de réalisation particulier de la technique proposée.

### Description détaillée de l'invention

La présente demande permet de remédier à certains des inconvénients précités.

La technique proposée vise notamment à simplifier et à rendre plus robuste le parcours d'ajout d'un objet communicant à un réseau local de communication sans fil existant fourni par un dispositif électronique de type passerelle. Un tel ajout, qui correspond généralement au processus permettant la toute première connexion d'un objet communicant à un réseau sans fil existant, est parfois également désigné sous le terme d'« appairage » entre l'objet communicant et la passerelle faisant office de point d'accès au réseau sans fil.

Dans le présent document, la technique proposée est majoritairement présentée dans le contexte de l'ajout d'un objet communicant WiFi à un réseau WiFi existant, c'est-à-dire selon des protocoles de communication reposant sur la norme IEEE 802.11. Il est entendu que cet exemple est purement illustratif et non limitatif, et représentatif d'un mode de réalisation particulier de la technique proposée. En d'autres termes, la présente technique peut également être mise en œuvre pour l'ajout d'un objet communicant à un réseau sans fil reposant sur des protocoles de communication sans fil autre que des protocoles de communication selon la norme IEEE 802.11.

Comme détaillé par la suite, la présente technique est particulièrement avantageuse par rapport aux solutions de l'art antérieur sur de multiples aspects. En premier lieu, elle permet de limiter le nombre de saisies à effectuer par l'utilisateur pour ajouter un nouvel objet communicant à un réseau sans fil (par exemple un réseau WiFi) existant, réduisant ainsi *de facto* le risque d'erreur lors de telles saisies. En deuxième lieu, elle offre la possibilité de réaliser l'intégralité du processus d'ajout d'un objet communicant à un réseau sans fil (par exemple un réseau WiFi) existant au sein d'une même application dédiée à cette fin, exécutée sur un terminal de communication. Plus particulièrement, la présente technique simplifie de manière importante le parcours utilisateur, en évitant à ce dernier d'avoir à sortir de l'application dédiée et naviguer dans des écrans d'administration ou des écrans systèmes complexes pour modifier la configuration de son terminal de communication et/ou de sa passerelle, avec tous les risques que comportent de telles modifications. En troisième lieu, la technique proposée ne requiert pas de modification ou de conception spécifique des objets communicants: elle est compatible avec tout type d'objets communicants conformes au protocole de communication sans fil sur lequel repose le réseau sans fil concerné (et notamment, par exemple, avec les objets communicants WiFi conformes à la norme IEEE 802.11, dans le cadre de la mise en œuvre du procédé pour l'ajout d'un objet communicant WiFi à un réseau WiFi), y compris ceux déjà sur le marché.

Dans le cadre du présent document, on désigne par « objet communicant » un appareil électronique comprenant au moins une interface de communication lui permettant de se connecter à un réseau de communication, par exemple un réseau local ou le réseau Internet, via un ensemble de protocoles de communication sans fil prédéterminé. Par exemple, on désigne par « objet communicant WiFi » un appareil électronique comprenant au moins une interface WiFi lui permettant de se connecter à un réseau de communication via un ensemble de protocoles de communication sans fil selon la norme IEEE 802.11.

Sur toutes les figures du présent document, les éléments et étapes identiques sont désignés par une même référence numérique.

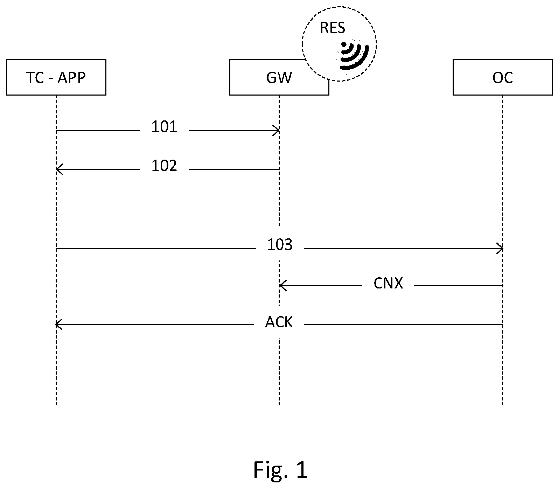

Selon un premier aspect, la présente technique se rapporte à un procédé d'ajout d'un objet communicant à un réseau local sans fil. Le principe général d'un tel procédé est illustré en relation avec la **figure 1****,** dans le cadre illustratif de l'ajout d'un objet communicant WiFi à un réseau WiFi. Le réseau WiFi RES auquel un utilisateur souhaite ajouter un objet communicant OC est fourni par une passerelle GW, qui fait donc office de point d'accès à ce réseau RES. Le procédé selon la technique proposée est mis en œuvre par un terminal de communication TC comprenant une interface WiFi, et connecté audit réseau RES. Ce terminal de communication TC comprend également un écran et des moyens de saisies, et prend par exemple la forme d'un téléphone intelligent (« smartphone »), d'une tablette, d'un ordinateur, etc. Plus particulièrement, le procédé est mis en œuvre par l'intermédiaire d'une application APP exécutée sur le terminal de communication TC, cette application APP comprenant au moins un module dédié à l'ajout d'un nouvel objet communicant WiFi au sein d'un réseau local sans fil. L'application dédiée APP est par exemple une application préinstallée sur le terminal de communication TC, ou disponible au téléchargement ou sur un support de stockage de manière à permettre son installation sur le terminal de communication TC. Elle est par exemple mise à disposition des utilisateurs par un constructeur d'objets communicants, ou par un fournisseur de services. Comme décrit par la suite, toutes les étapes du procédé d'ajout d'un objet communicant à un réseau de communication sans fil selon la présente technique sont mises en œuvre par cette application dédiée APP (en d'autres termes, avec la technique proposée, l'intégralité du processus d'ajout d'un objet communicant à un réseau sans fil est réalisée au sein de cette application APP, sans que l'utilisateur ait besoin d'effectuer des manipulations sur le terminal de communication TC hors de cette application APP).

Dans une étape 101, le terminal de communication TC émet à destination de la passerelle GW, une requête d'obtention d'au moins une information de connexion au réseau WiFi RES fourni par la passerelle GW.

Dans une étape 102, en réponse à la requête émise à l'étape 101, le terminal de communication TC reçoit en provenance de la passerelle GW, des informations de connexion suffisantes pour permettre à un dispositif disposant d'une interface WiFi et de ces informations de connexion de se connecter au réseau RES fourni par la passerelle GW. De telles informations de connexion comprennent au moins un identifiant du réseau RES, typiquement sous la forme d'un SSID (de l'anglais « *Service Set Identifier* »*,* qui correspond au nom du réseau sans fil), et généralement un mot de passe associé.

Dans une étape 103, le terminal de communication TC transmet ces informations de connexion à l'objet communicant OC, permettant ainsi à l'objet communicant OC d'établir une connexion CNX au réseau Wifi RES via la passerelle GW. Éventuellement, une fois cette connexion établie, l'objet communicant OC a la possibilité d'envoyer un message ACK confirmant le succès de cette connexion à l'application APP du terminal de communication TC.

Ainsi, la technique proposée permet d'épargner à l'utilisateur la saisie manuelle et fastidieuse des informations de connexion au réseau WiFi RES sur le terminal de communication TC, ces informations étant récupérées directement auprès de la passerelle GW par le terminal de communication TC déjà connecté au réseau WiFi RES, par exemple au moyen d'une première interface de programmation applicative (ou API, pour « *Application Programming Interface* », en terminologie anglo-saxonne) prévue à cette fin au niveau de la passerelle GW. Il n'y a donc plus de risque d'erreur de saisie de ces informations par l'utilisateur, et l'ajout de l'objet communicant OC au réseau WiFi RES s'en trouve simplifié.

L'étape 103 de transmission à l'objet communicant OC des informations de connexion obtenues à l'étape 102 peut être mise en œuvre via différentes techniques utilisées classiquement à cette fin, par exemple :
- par diffusion générale (i.e. en mode « broadcast ») ou groupée (i.e. en mode « multicast ») mise en œuvre via l'interface WiFi du terminal de communication (appairage WiFi dans un mode communément désigné sous le nom de « mode EZ », abréviation du mot anglais « *easy* » signifiant « facile », et qualifiant un mode dans lequel il n'est pas nécessaire d'établir un canal de communication point-à-point entre le terminal de communication et l'objet communicant, l'objet communicant à portée de diffusion interceptant lui-même les données diffusées par le terminal de communication) ;
- via un canal de communication WiFi établi directement avec l'objet communicant WiFi préalablement configuré en tant que point d'accès WiFi (appairage WiFi dans un mode communément désigné sous le nom de « mode AP », de l'anglais « *Access Point* »*,* et qualifiant un mode dans lequel l'objet communicant diffuse son propre réseau sans fil pour lequel il fait office de point d'accès et auquel le terminal de communication se connecte directement pour permettre une transmission ultérieure de données entre ces deux équipements) ;
- éventuellement par d'autres moyens, via d'autres protocoles de communication que le WiFi, par exemple via une liaison Bluetooth ou NFC, quand l'objet communicant et le terminal de communication le permettent tous les deux.

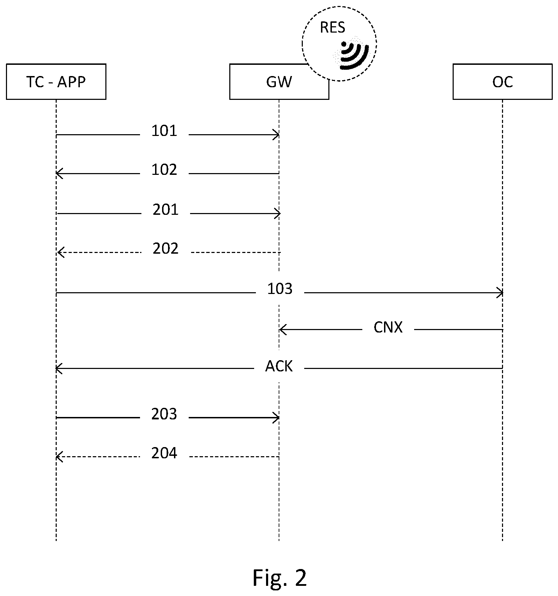

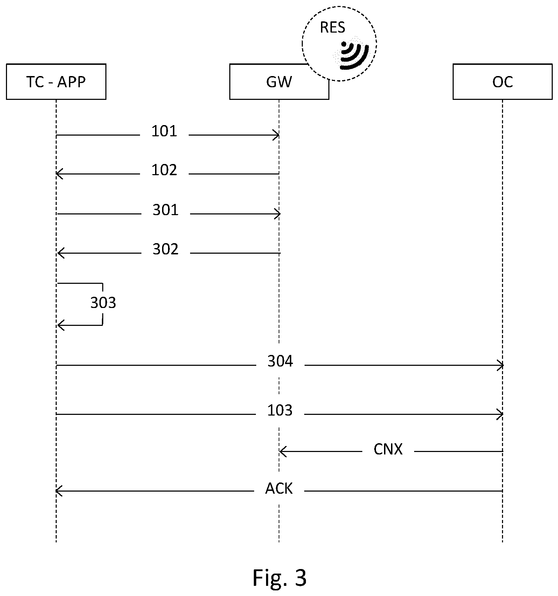

Sur ces aspects, et comme décrit ci-après en relation avec les figures 2 et 3, la présente technique offre également, en plus de la récupération automatisée et facilitée des informations de connexions décrites précédemment, des mécanismes complémentaires visant à simplifier et à rendre plus robuste la transmission de ces informations du terminal de communication TC à l'objet communicant OC, en particulier quand cette transmission est mise en œuvre au moyen des interfaces WiFi de ces équipements (i.e. en mode EZ et AP).

Comme détaillé par la suite, ces mécanismes ont en commun une sollicitation, par le terminal de communication TC, par exemple par l'intermédiaire d'interfaces de programmation applicative dédiées exposées (i.e. mises à disposition) par la passerelle GW, de la mise en œuvre au niveau de la passerelle GW d'au moins une opération visant à optimiser la transmission des informations de connexion du terminal de communication TC à l'objet communicant OC (par exemple en favorisant la sélection d'une bande de fréquences appropriée pour cette transmission). Une telle opération peut notamment prendre la forme, selon le mode de réalisation implémenté, d'une opération de désactivation de certaines fréquences au niveau de la passerelle GW, ou de la mise en œuvre d'un balayage réseau sur certaines fréquences par ladite passerelle GW.

### Premier mode de réalisation - transmission en mode EZ

On décrit dans un premier temps, en relation avec la **figure 2****,** un mode de réalisation particulier du procédé selon la présente technique, dans lequel l'étape 103 de transmission des informations de connexion au réseau WiFi RES du terminal de communication TC à l'objet communicant OC est mise en œuvre par diffusion générale (i.e. en mode « broadcast ») ou groupée (i.e. en mode « multicast ») desdites informations de connexion, via l'interface WiFi du terminal de communication TC (cas d'une transmission en mode EZ). Les étapes 101 et 102 d'obtention des informations de connexion restent identiques à celles déjà décrites en relation avec la figure 1.

Dans ce mode de réalisation particulier, avant de diffuser les informations de connexion, le terminal de communication émet, dans une étape 201, une requête de désactivation d'au moins une première bande de fréquence WiFi au niveau de la passerelle GW (recourant ainsi par exemple à une deuxième interface de programmation applicative prévue à cette fin au niveau de la passerelle GW).

Comme décrit de manière plus détaillée par la suite, l'émission d'une telle requête est particulièrement astucieuse en ce qu'elle permet, sans intervention de l'utilisateur et sans sortir de l'application APP en cours d'exécution sur le terminal de communication TC, de faire basculer automatiquement le terminal de communication TC (le plus souvent multi-bandes) dans un mode de communication reposant sur l'utilisation d'une deuxième bande de fréquence WiFi différente de l'au moins une première bande de fréquence WiFi désactivée au niveau de la passerelle GW. De cette manière, il est ainsi possible, sans quitter l'application APP, de forcer le terminal de communication TC à émettre dans une bande de fréquence WiFi donnée (i.e. la deuxième bande de fréquences) pour la transmission par diffusion générale ou groupée des informations de connexion réalisée à l'étape 103, et plus particulièrement dans la bande de fréquences WiFi utilisée par l'objet communicant OC. On épargne ainsi à l'utilisateur les manipulations laborieuses et peu intuitives, généralement requises par les solutions de l'art antérieur, de modification manuelle de la configuration de la passerelle via des interfaces d'administration souvent très techniques et absconses pour le grand-public, ces manipulations consistant par exemple à devoir modifier manuellement certains paramètres de la passerelle afin de couper les bandes de fréquences non supportées par l'objet communicant, ou afin de dissocier les bandes de fréquences dans lesquelles la passerelle opère de sorte que cette dernière diffuse un nom de réseau (SSID) différent pour chacune des bandes de fréquences supportées et que l'utilisateur puisse par la suite connecter son terminal de communication au réseau idoine (i.e. celui opérant sur une bande de fréquences supportée par l' objet communicant).

À titre d'exemple illustratif et non limitatif, on peut noter que la plupart des passerelles actuelles supportent à la fois la bande de fréquences WiFi à 2,4 GHZ et au moins une parmi les bandes de fréquences WiFi à 5 GHz et 6 GHz. Aussi, selon une caractéristique particulière de la présente technique, la requête de désactivation d'au moins une première bande de fréquence est une demande de désactivation des bandes de fréquences 5 GHz et/ou 6 GHz au niveau de la passerelle GW. Une fois cette requête traitée, la passerelle GW n'émet plus que dans la bande de fréquences WiFi 2,4 GHz. Ceci engendre, sans intervention de l'utilisateur du terminal de communication et sans quitter l'application APP dédiée d'ajout d'un objet communicant WiFi, une bascule automatique du terminal de communication TC dans un mode de communication reposant sur l'utilisation de la deuxième bande de fréquence WiFi 2,4 GHz, selon des mécanismes classiques de préservation de la connexion WiFi entre le terminal de communication et la passerelle. En d'autres termes, le terminal de communication TC, détectant que sa connexion au réseau WiFi RES n'est plus possible sur les premières bandes de fréquences WiFi 5 GHz et/ou 6 GHz, est ainsi forcé à communiquer sur la deuxième bande de fréquence WiFi 2,4 GHz, qui est précisément la bande de fréquence majoritairement utilisée par la plupart des objets communicants disponibles sur le marché. Selon la technique proposée, cette bascule est en outre totalement transparente pour l'utilisateur.

Ainsi, sans intervention de l'utilisateur et sans quitter l'application dédiée APP, le terminal de communication bascule automatiquement dans un mode de transmission WiFi dont la probabilité est grande qu'il soit compatible avec le mode d'écoute WiFi utilisé par l'objet communicant pour recevoir les informations de connexion. Le parcours d'ajout d'un objet communicant à un réseau WiFi en mode EZ est ainsi rendu encore plus simple et plus robuste.

Selon une caractéristique particulière, une fois les informations de connexion transmises à l'objet communicant OC, le terminal de communication TC émet à destination de la passerelle GW, dans une étape 203, une requête de réactivation, au niveau de ladite passerelle, des premières bandes de fréquences précédemment désactivées.

De manière alternative, la désactivation des premières bandes de fréquences au niveau de la passerelle GW, à réception par la passerelle GW de la requête de désactivation émise à l'étape 201, est associée à une durée de temporisation. Dans ce cas, la réactivation, par la passerelle GW, des premières bandes de fréquences précédemment désactivées est alors automatique au bout d'un temps prédéterminé correspondant à ladite durée de temporisation (par exemple de l'ordre de quelques dizaines de secondes, e.g. trente secondes), sans que l'étape 203 d'émission d'une requête de réactivation s'avère nécessaire.

Selon une caractéristique particulière, l'émission par le terminal de communication TC d'une requête de désactivation d'au moins une première bande de fréquences à étape 201 (respectivement de réactivation d'au moins une première bande de fréquences à étape 203) est suivie, de manière optionnelle, par la réception en provenance de la passerelle GW d'un message de confirmation de ladite désactivation, dans une étape 202 (respectivement de confirmation de ladite réactivation, dans une étape 204).

### Deuxième mode de réalisation - transmission en mode AP

On décrit maintenant, en relation avec la **figure 3****,** un autre mode de réalisation particulier du procédé selon la présente technique, dans lequel l'étape 103 de transmission des informations de connexion au réseau WiFi RES du terminal de communication TC à l'objet communicant OC est mise en œuvre au moyen d'un canal de communication WiFi direct établi entre le terminal de communication TC et l'objet communicant WiFi préalablement configuré en tant que point d'accès WiFi (cas d'une transmission en mode AP). Les étapes 101 et 102 d'obtention des informations de connexion restent identiques à celles déjà décrites en relation avec la figure 1.

Dans ce mode de réalisation particulier, avant de transmettre les informations de connexion, le terminal de communication émet, dans une étape 301, une requête de balayage réseau à destination de la passerelle GW (recourant ainsi par exemple à une troisième interface de programmation applicative prévue à cette fin au niveau de la passerelle GW).

En réponse à cette requête, le terminal de communication TC reçoit, en provenance de la passerelle GW, dans une étape 302, une liste de réseaux WiFi détectés par la passerelle GW au cours dudit balayage réseau. L'objet communicant ayant préalablement été configuré en tant que point d'accès WiFi, la liste reçue comprend normalement au moins une entrée correspondant au réseau WiFi associé audit objet communicant OC, comprenant au moins le nom (i.e. le SSID) dudit réseau (sous réserve que l'objet communicant OC ne soit pas trop éloigné de la passerelle GW).

Dans le cadre de la présente technique, une telle liste peut être exploitée de différente manière.

Dans un mode de réalisation particulier, la liste reçue par le terminal de communication TC est par exemple affichée intégralement au sein d'une interface graphique générée par l'application APP, sous une forme permettant à l'utilisateur du terminal de communication de naviguer dans la liste affichée et d'y sélectionner un élément. De cette manière, l'utilisateur a accès, sans quitter l'application APP, à la liste des réseaux WiFi détectés à proximité de la passerelle GW (et donc à proximité du terminal de communication TC), incluant le réseau WiFi créé par l'objet communicant OC en tant que point d'accès. La liste affichée comprend par exemple le nom (SSID) des différents réseaux sans fil détectés par la passerelle GW au cours du balayage réseau effectué.

Dans d'autres modes de réalisation, des mécanismes sont prévus pour permettre de filtrer la liste reçue en étape 302, afin ou bien de limiter le nombre de réseaux proposés à l'utilisateur comme étant susceptibles de correspondre au réseau WiFi généré par l'objet communicant OC et affichés à ce titre au sein d'une interface graphique générée par l'application APP, ou bien d'opérer une sélection automatique par l'application APP (i.e. sans intervention de l'utilisateur) du réseau considéré comme ayant la plus grande probabilité de correspondre au réseau WiFi généré par l'objet communicant OC.

Selon une caractéristique particulière, pour limiter la liste des réseaux détectés aux réseaux WiFi ayant une plus grande probabilité de correspondre à un réseau WiFi généré par un objet communicant, la requête émise à l'étape 301 peut comprendre un paramètre spécifiant une bande de fréquences WiFi à utiliser pour ledit balayage, typiquement la bande de fréquences 2,4 GHz majoritairement utilisée par les objets communicants actuellement disponibles sur le marché.

De manière complémentaire ou alternative, il est également possible de filtrer la liste des réseaux détectés sur la base de leurs noms (SSID). En effet, il est fréquent que le nom d'un réseau associé à un objet communicant réponde à un formalisme particulier connu, qu'il est possible de préenregistrer dans l'application APP, par exemple sous la forme d'un masque de nom. Par exemple, une portion du nom d'un réseau associé à un objet communicant (souvent une première partie de ce nom) comprend généralement le nom du fabriquant de l'objet communicant et/ou le nom de modèle de l'objet communicant. Selon une caractéristique particulière de la technique proposée, l'application APP met alors en œuvre une étape d'identification, au sein de la liste de réseaux WiFi détectés, d'au moins un réseau WiFi dont le nom satisfait aux critères d'un masque de nom prédéterminé stocké dans ladite application APP, permettant ainsi d'opérer un premier filtrage. Si elle contient plusieurs éléments, la liste ainsi filtrée est par exemple affichée au sein d'une interface graphique générée par l'application APP, sous une forme permettant à l'utilisateur du terminal de communication de naviguer dans la liste affichée et d'y sélectionner un élément. En revanche, si la liste filtrée ne contient qu'un seul élément, autrement dit lorsque ladite étape d'identification délivre un unique résultat, il n'est pas nécessaire d'afficher cet élément au sein d'une interface graphique de l'application APP : en effet, le réseau identifié de manière unique correspond alors selon toute probabilité au réseau associé à l'objet communicant OC, et il peut être sélectionné de manière automatique par l'application APP sans intervention de l'utilisateur. Bien que n'étant pas nécessaire, l'unique résultat peut être affiché au sein de l'interface graphique de l'application APP.

Quoiqu'il en soit, que ce soit de manière automatique ou consécutivement à un choix de l'utilisateur via une interface graphique dédiée de l'application APP, le terminal de communication opère, dans une étape 303, la sélection, au sein de la liste reçue en étape 302, d'un réseau correspondant au réseau associé à l'objet communicant OC configuré en tant que point d'accès WiFi

Une fois ce réseau WiFi de l'objet communicant OC identifié et sélectionné au moyen de l'application APP, une étape 304 de connexion du terminal de communication TC à ce réseau est mise en œuvre, permettant ainsi l'établissement du canal de communication WiFi direct entre le terminal de communication TC et l'objet communicant OC (i.e. via la connexion du terminal de communication TC au réseau WiFi créé par l'objet communicant OC). Il convient de noter ici que l'étape 304 est réalisée sans que l'utilisateur ait besoin de sortir de l'application APP. Plus particulièrement, il est proposé d'exploiter la possibilité offerte par les systèmes d'exploitation des terminaux de communication mobiles actuels d'autoriser une application à déclencher une connexion du terminal de communication à un réseau WiFi à la condition que cette application ait accès au nom du réseau WiFi (i.e. son SSID) en question (ce qui est le cas ici pour l'application APP, grâce à la mise en œuvre préalable des étapes 301 et 302). En requérant de la passerelle GW qu'elle se charge elle-même du balayage réseau, la présente technique permet de contourner de manière astucieuse la restriction, également imposée par les systèmes d'exploitation des terminaux de communication mobiles actuels, selon laquelle une application n'est pas autorisée à effectuer par elle-même un balayage réseau visant à détecter les différents réseaux WiFi disponibles à proximité. En d'autres termes, on utilise ici avantageusement les résultats d'un balayage réseau effectué au niveau de la passerelle GW et « poussés » vers l'application APP du terminal de communication TC, plutôt que les résultats d'un balayage réseau effectué par le terminal de communication TC lui-même, qui aurait imposé à l'utilisateur de quitter l'application APP (ou à tout le moins de la faire passer en arrière-plan) afin d'aller naviguer dans les écrans natifs et les paramètres systèmes du terminal de communication, et qui aurait rendu le parcours utilisateur particulièrement complexe et beaucoup moins intuitif. Ainsi, avec la technique proposée, l'utilisateur est tout au plus invité à valider un nombre très restreint de messages (et éventuellement saisir un mode de passe associé au réseau WiFi généré par l'objet communicant OC, si un tel mot de passe est requis) affichés automatiquement par le système, directement au sein de l'application APP. Le parcours utilisateur est ainsi parfaitement encadré, et l'utilisateur n'a pas à naviguer de lui-même librement dans des écrans natifs système pour essayer de découvrir par lui-même les paramètres de configurations à modifier (évitant ainsi les risques de se perdre lors de la navigation dans ces écrans et/ou de modifier de mauvais paramètres de configuration).

Selon une caractéristique particulière, la liste de réseaux WiFi reçue par le terminal de communication TC à l'étape 302 comprend, pour chaque réseau détecté présent dans ladite liste, outre le SSID, une valeur indicative d'un niveau de puissance en réception (RSSI, ou « *Received Signal Strength Indicator »* en anglais) associé audit réseau, au niveau de la passerelle GW. Une telle valeur est intéressante en ce qu'elle permet à l'utilisateur d'estimer, dans une certaine mesure, la distance à la passerelle GW de l'équipement à l'origine du signal WiFi reçu (à tout le moins de manière relative, par comparaison des valeurs de RSSI associées à chaque réseau WiFi détecté). Une telle donnée peut notamment être utilisée pour faciliter l'identification du réseau WiFi associé à l'objet communicant que l'utilisateur souhaite ajouter à son réseau local. Par exemple, cette donnée peut être utilisée pour classer la liste des réseaux détectés lors de l'affichage de cette liste au sein d'une interface graphique de l'application APP (e.g. par RSSI croissant ou décroissant).

Selon une caractéristique particulière, la séquence d'émission 301 d'une requête de balayage réseau et de réception 302 d'une réponse comprenant une liste de réseaux Wifi avec RSSI associés est mise en œuvre plusieurs fois (i.e. au moins deux fois), et un message invitant l'utilisateur à éloigner ou approcher de la passerelle GW l'objet communicant WiFi OC qu'il souhaite ajouter à son réseau est affiché dans l'application APP entre chaque séquence. De cette manière, en comparant, pour chaque réseau Wifi détecté, les valeurs indicatives de niveau de puissance en réception obtenues lors de plusieurs itérations successives des séquences précitées, il est possible pour l'application APP d'identifier les réseaux WiFi associés à des équipements dont la position semble avoir variée entre deux séquences, et de sélectionner ainsi automatiquement, ou à tout le moins de mettre en évidence, parmi la liste de réseaux détectés, en fonction du résultat de ladite comparaison, le réseau WiFi ayant la plus forte probabilité de correspondre au réseau WiFi fourni par l'objet communicant OC (mécanisme de lever de doute).

De manière complémentaire ou alternative, selon un principe relativement similaire, la séquence d'émission 301 d'une requête de balayage réseau et de réception 302 d'une réponse comprenant une liste de réseaux Wifi est mise en œuvre au moins deux fois, et un message invitant l'utilisateur à basculer l'objet communicant WiFi qu'il souhaite ajouter à son réseau d'un état où il n'est pas configuré comme point d'accès WiFi à un état dans lequel il est configuré comme point d'accès WiFi est affiché dans l'application APP entre deux séquences. De cette manière, en comparant, pour chaque réseau Wifi détecté, les listes de réseaux détectés lors de plusieurs itérations successives des séquences précitées, il est possible pour l'application APP d'identifier les réseaux WiFi non détectés lors d'une première séquence mais détecté lors d'une séquence ultérieure, et de sélectionner ainsi automatiquement, ou à tout le moins de mettre en évidence, parmi la liste de réseaux détectés, en fonction du résultat de ladite comparaison, le réseau WiFi ayant la plus forte probabilité de correspondre au réseau WiFi fourni par l'objet communicant OC (autre mécanisme de lever de doute).

### Dispositifs

Selon un autre aspect, la technique proposée se rapporte également à un terminal de communication apte à réaliser le procédé précédemment décrit dans l'un quelconque de ses modes de réalisation, pour la mise en œuvre d'un ajout simplifié d'un objet communicant WiFi à un réseau local sans fil WiFi fourni par une passerelle. Plus particulièrement, le terminal de communication selon la présente technique comprend :
- des moyens d'émission, à destination de ladite passerelle, d'une requête d'obtention d'au moins une information de connexion audit réseau ;
- des moyens de réception, en provenance de ladite passerelle de ladite au moins une information de connexion audit réseau ;
- des moyens de transmission, audit objet communicant WiFi, de ladite au moins une information de connexion audit réseau.

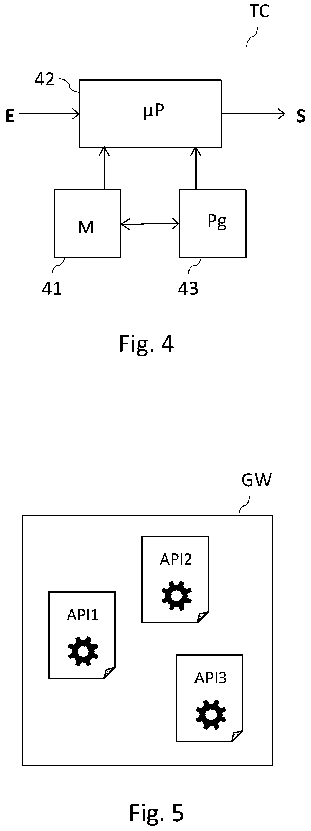

La **figure 4** représente, de manière schématique et simplifiée, la structure d'un tel terminal de communication, dans un mode de réalisation particulier. Le terminal de communication selon la technique proposée comprend par exemple une mémoire 41 constituée d'une mémoire tampon M, une unité de traitement 42, équipée par exemple d'un microprocesseur µP, et pilotée par le programme d'ordinateur Pg 43, mettant en œuvre des étapes du procédé d'ajout d'un objet communicant à un réseau local sans fil selon au moins un mode de réalisation de l'invention. À cette fin, le terminal de communication comprend également au moins une interface de communication (par exemple une interface de communication WiFi), lui permettant de se connecter à un réseau local de communication sans fil (par exemple un réseau WiFi) fourni par un dispositif de type passerelle ou par un objet communicant.

À l'initialisation, les instructions de code du programme d'ordinateur 43 sont chargées dans la mémoire tampon avant d'être exécutées par le processeur de l'unité de traitement 42. L'unité de traitement 42 reçoit en entrée E par exemple des signaux délivrés en réponse à des actions d'un utilisateur sur une application dédiée à l'ajout d'objets communicants à un réseau WiFi, exécutée par le terminal de communication.

Le microprocesseur de l'unité de traitement 42 réalise alors les étapes du procédé d'ajout, selon les instructions du programme d'ordinateur 43. Plus particulièrement, en fonction des signaux reçus en entrée E, l'unité de traitement 42 émet une ou plusieurs requêtes à destination d'une passerelle fournissant un réseau local de communication sans fil auquel le terminal de communication est connecté, selon un format prédéfini cohérent avec des interfaces de programmation applicative exposées par ladite passerelle. Les réponses à ces requêtes sont ensuite traitées par l'unité de traitement 42, pour aboutir en sortie S à une transmission d'informations de connexion à destination d'un objet communicant, permettant à ce dernier d'établir ultérieurement une connexion sans fil audit réseau.

Selon un autre aspect, la technique proposée se rapporte également à une passerelle GW telle qu'illustrée de manière schématique en relation avec la **figure 5****,** dans un mode de réalisation particulier. Une telle passerelle GW comprend au moins une interface de communication lui permettant de générer un réseau local sans fil (par exemple une interface de communication WiFi lui permettant de générer un réseau WiFi), et un ensemble d'interfaces de programmation applicative permettant la fourniture de services à des terminaux de communication, sur requête. Plus particulièrement, la passerelle GW selon la présente technique comprend au moins une première interface de programmation applicative API1 qui obtient, sur requête d'un terminal de communication (dit terminal requérant) connecté au réseau sans fil (par exemple au réseau WiFi) créé par ladite passerelle, au moins une information de connexion permettant d'établir une connexion audit réseau, et qui retourne au terminal requérant une réponse comprenant ladite au moins une information de connexion.

Dans un mode de réalisation particulier de la présente technique, la passerelle GW peut éventuellement également comprendre, de manière complémentaire :
- une deuxième interface de programmation applicative API2 qui met en œuvre, sur requête d'un terminal de communication connecté à ladite passerelle, la désactivation ou la réactivation au niveau de ladite passerelle d'au moins une bande de fréquences (la bande de fréquences à désactivée ou réactivée étant par exemple identifiée dans la requête) ; et/ou
- une troisième interface de programmation applicative API3 qui met en œuvre, sur requête d'un terminal de communication (dit terminal requérant) connecté à ladite passerelle, au niveau de ladite passerelle, un balayage réseau de détection de réseaux sans fil (par exemple de réseaux WiFi), et qui retourne audit terminal requérant une réponse comprenant la liste des réseaux détectés au voisinage de ladite passerelle (par exemple sous la forme d'une liste de SSID) et éventuellement, de manière optionnelle, pour chaque réseau WiFi détecté, une valeur indicative d'un niveau de puissance en réception (RSSI) associé audit réseau.

Comme détaillé en relation avec les divers modes de réalisation particuliers présentés, l'implémentation au sein d'une passerelle d'interfaces de programmation applicative telles que précédemment décrites permet, au niveau d'un terminal de communication connecté à ladite passerelle, la mise en œuvre d'un procédé d'ajout d'un objet communicant à un réseau local sans fil (par exemple un réseau WiFi) qui offre de nombreux avantages vis-à-vis des solutions existantes. Les caractéristiques présentées dans les différents modes de réalisation décrits sont combinables sans sortir du cadre de la présente technique, le mode de réalisation portant sur une transmission en mode AP pouvant par exemple être mis en œuvre après celui portant sur une transaction en mode EZ, en solution de repli si l'objet communicant ne parvient pas, pour une raison quelconque, à se connecter au réseau de communication sans fil fourni par la passerelle après mise en œuvre du premier mode de réalisation.

## Revendications

1. Procédé d'ajout d'un objet communicant (OC) à un réseau local de communication sans fil (RES) fourni par une passerelle (GW), ledit procédé étant mis en œuvre au sein d'une application dédiée (APP) exécutée sur un terminal de communication (TC) connecté audit réseau via ladite passerelle, ledit procédé étant **caractérisé en ce qu'**il comprend les étapes suivantes :
- émission (101), à destination de ladite passerelle, d'une requête d'obtention d'au moins une information de connexion audit réseau ;
- réception (102), en provenance de ladite passerelle de ladite au moins une information de connexion audit réseau ;
- transmission (103), audit objet communicant, de ladite au moins une information de connexion audit réseau.

2. Procédé selon la revendication 1, **caractérisé en ce qu'**il comprend, préalablement à ladite transmission (103), une étape d'émission, à destination de ladite passerelle, d'au moins une requête de mise en œuvre par ladite passerelle d'au moins une opération parmi une opération de désactivation de fréquence et une opération de balayage en fréquence, ladite requête comprenant au moins une information de bande de fréquences.

3. Procédé selon la revendication 2, **caractérisé en ce que** ladite requête d'obtention d'au moins une information de connexion au réseau, ladite requête de mise en œuvre d'une opération de désactivation de fréquence, et ladite requête de mise en œuvre d'une opération de balayage en fréquence sont respectivement formatées conformément à une première, une deuxième et une troisième interfaces de programmation applicative exposées par ladite passerelle pour la fourniture de services correspondants audit terminal de communication.

4. Procédé selon la revendication 1, **caractérisé en ce que** ladite transmission (103) est mise en œuvre par diffusion desdites informations de connexion, et **en ce que** ledit procédé comprend, préalablement à ladite transmission, une étape d'émission (201), à destination de ladite passerelle, d'une requête de désactivation d'au moins une première bande de fréquence au niveau de ladite passerelle, ladite désactivation entrainant une bascule automatique dudit terminal de communication dans un mode de communication utilisant une deuxième bande de fréquence autre que ladite au moins une première bande de fréquence désactivée au niveau de ladite passerelle, pour ladite transmission par diffusion.

5. Procédé selon la revendication 4, **caractérisé en ce que** ladite requête de désactivation d'au moins une première bande de fréquence est une requête de désactivation d'au moins une parmi les bandes de fréquences 5 GHz et 6 GHz.

6. Procédé selon la revendication 4, **caractérisé en ce qu'**il comprend, postérieurement à ladite transmission, une étape d'émission (203), à destination de ladite passerelle, d'une requête de réactivation, au niveau de ladite passerelle, de ladite au moins une première bande de fréquence précédemment désactivée.

7. Procédé selon la revendication 1, **caractérisé en ce que** ladite transmission (103) desdites informations de connexion est mise en œuvre au moyen d'un canal de communication direct établi entre ledit terminal de communication et ledit objet communicant préalablement configuré en tant que point d'accès, ledit procédé étant **caractérisé en ce qu'**il comprend les étapes suivantes, mises en œuvre préalablement à ladite transmission (103) :
- émission (301), à destination de ladite passerelle, d'une requête de balayage réseau ;
- réception (302), en provenance de ladite passerelle, d'une liste de réseaux détectés par ladite passerelle au cours dudit balayage réseau ;
- sélection (303), au sein de ladite liste, d'un réseau correspondant au réseau associé audit objet communicant configuré en tant que point d'accès ;
- établissement (304) dudit canal de communication direct entre ledit terminal de communication et ledit objet communicant, par connexion du terminal de communication audit réseau sélectionné.

8. Procédé selon la revendication 7, **caractérisé en ce que** ladite requête de balayage réseau comprend une information de bande de fréquences à utiliser pour ledit balayage réseau.

9. Procédé selon la revendication 7, **caractérisé en ce qu'**il comprend une étape d'identification, au sein de ladite liste de réseaux détectés, d'au moins un réseau dont le nom satisfait aux critères d'un masque de nom prédéterminé stocké dans ladite application dédiée ;
et, lorsque ladite étape d'identification délivre un unique résultat, **en ce que** ladite étape de sélection comprend la sélection automatique dudit réseau identifié de manière unique.

10. Procédé selon la revendication 7, **caractérisé en ce que** ladite liste comprend une valeur indicative de niveau de puissance en réception associée à chaque réseau détecté.

11. Procédé selon la revendication 10, **caractérisé en ce que** lesdites étapes d'émission (301) d'une requête de balayage réseau et de réception (302) d'une liste de réseaux en réponse à ladite requête de balayage sont mises en œuvre au moins deux fois, et **en ce que** le procédé comprend les étapes suivantes :
- affichage, entre deux itérations desdites étapes d'émission d'une requête de balayage réseau et de réception d'une liste de réseaux en réponse à ladite requête de balayage, d'une invitation à éloigner ou approcher ledit objet communicant de ladite passerelle ;
- comparaison, pour chaque réseau détecté, des valeurs indicatives de niveau de puissance en réception obtenues lors de chacune desdites itérations ;
- sélection automatique ou mise en évidence au sein d'une interface graphique associée à ladite application, parmi la liste de réseaux détectés, en fonction du résultat de ladite comparaison, d'un réseau ayant la plus forte probabilité de correspondre au réseau fourni par ledit objet communicant configuré en tant que point d'accès.

12. Procédé selon la revendication 7, **caractérisé en ce que** lesdites étapes d'émission (301) d'une requête de balayage réseau et de réception (302) d'une liste de réseaux en réponse à ladite requête de balayage sont mises en œuvre au moins deux fois, et **en ce que** le procédé comprend les étapes suivantes :
- affichage, entre deux itérations desdites étapes d'émission d'une requête de balayage réseau et de réception d'une liste de réseaux en réponse à ladite requête de balayage, d'une invitation à basculer ledit objet communicant en configuration point d'accès ;
- comparaison des listes de réseaux détectés lors de chacune desdites itérations ;
- sélection automatique ou mise en évidence au sein d'une interface graphique associée à ladite application, parmi la liste de réseaux détectés, en fonction du résultat de ladite comparaison, d'un réseau ayant la plus forte probabilité de correspondre au réseau fourni par ledit objet communicant configuré en tant que point d'accès.

13. Terminal de communication pour la mise en œuvre d'un ajout d'un objet communicant à un réseau local sans fil fourni par une passerelle, ledit terminal de communication étant **caractérisé en ce qu'**il comprend :
- des moyens d'émission, à destination de ladite passerelle, d'une requête d'obtention d'au moins une information de connexion audit réseau ;
- des moyens de réception, en provenance de ladite passerelle de ladite au moins une information de connexion audit réseau ;
- des moyens de transmission, audit objet communicant, de ladite au moins une information de connexion audit réseau.

14. Passerelle (GW) pour la fourniture d'un réseau local sans fil (RES), ladite passerelle étant **caractérisée en ce qu'**elle comprend un ensemble d'interfaces de programmation applicative pour la fourniture d'au moins un service à un terminal de communication connecté audit réseau via ladite passerelle, sur requête dudit terminal de communication, dit terminal requérant, ledit ensemble d'interfaces de programmation applicative comprenant :
- une première interface de programmation applicative (API1) d'obtention d'au moins une information de connexion audit réseau (RES), et de fourniture desdites informations de connexion audit terminal requérant ;
- une deuxième interface de programmation applicative (API2) de désactivation/réactivation d'au moins une bande de fréquence au niveau de ladite passerelle ;
- une troisième interface de programmation applicative (API3) de mise en œuvre d'un balayage réseau et de fourniture audit terminal requérant d'une liste de réseaux détectés durant ledit balayage réseau.

15. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon l'une quelconque des revendications 1 à 12, lorsqu'il est exécuté par un processeur d'un terminal de communication.

## Patentansprüche

1. Verfahren zum Hinzufügen eines kommunizierenden Objekts (OC) zu einem drahtlosen lokalen Kommunikationsnetzwerk (RES), das durch ein Gateway (GW) bereitgestellt wird, wobei das Verfahren innerhalb einer dedizierten Anwendung (APP) implementiert wird, die auf einem Kommunikationsendgerät (TC) ausgeführt wird, das über das Gateway mit dem Netzwerk verbunden ist, wobei das Verfahren **dadurch gekennzeichnet ist, dass** es die folgenden Schritte umfasst:
- Senden (101), an das Gateway, einer Anforderung zum Erhalten mindestens einer Information zur Verbindung mit dem Netzwerk;
- Empfangen (102), von dem Gateway, der mindestens einen Information zur Verbindung mit dem Netzwerk;
- Übertragen (103) der mindestens einen Information zur Verbindung mit dem Netzwerk an das kommunizierende Objekt.

2. Verfahren nach Anspruch 1, **dadurch gekennzeichnet, dass** es vor dem Übertragen (103) einen Schritt des Sendens, an das Gateway, mindestens einer Anforderung zur Implementierung mindestens einer Operation unter einer Frequenzdeaktivierungsoperation und/oder einer Frequenz-Scan-Operation durch das Gateway umfasst, wobei die Anforderung mindestens eine Frequenzbandinformation umfasst.

3. Verfahren nach Anspruch 2, **dadurch gekennzeichnet, dass** die Anforderung zum Erhalten mindestens einer Information zur Verbindung mit dem Netzwerk, die Anforderung zur Implementierung einer Frequenzdeaktivierungsoperation und die Anforderung zur Implementierung einer Frequenz-Scan-Operation jeweils gemäß einer ersten, einer zweiten und einer dritten Anwendungsprogrammierschnittstelle formatiert sind, die von dem Gateway zur Bereitstellung von entsprechenden Dienste für das Kommunikationsendgerät offengelegt werden.

4. Verfahren nach Anspruch 1, **dadurch gekennzeichnet, dass** das Übertragen (103) durch Broadcast der Informationen zur Verbindung implementiert wird und dass das Verfahren vor dem Übertragen einen Schritt des Sendens (201), an das Gateway, einer Anforderung zur Deaktivierung mindestens eines ersten Frequenzbandes an dem Gateway umfasst, wobei die Deaktivierung zu einer automatischen Umschaltung des Kommunikationsendgeräts in einen Kommunikationsmodus führt, der ein zweites Frequenzband, das verschieden von dem mindestens einen an dem Gateway deaktivierten ersten Frequenzband ist, zum Übertragen durch Broadcast verwendet.

5. Verfahren nach Anspruch 4, **dadurch gekennzeichnet, dass** die Anforderung zur Deaktivierung mindestens eines ersten Frequenzbandes eine Anforderung zur Deaktivierung mindestens eines unter den 5 GHz- und 6 GHz-Frequenzbändern ist.

6. Verfahren nach Anspruch 4, **dadurch gekennzeichnet, dass** es nach dem Übertragen einen Schritt des Sendens (203), an das Gateway, einer Anforderung zur Reaktivierung des mindestens einen zuvor deaktivierten ersten Frequenzbandes an dem Gateway umfasst.

7. Verfahren nach Anspruch 1, **dadurch gekennzeichnet, dass** das Übertragen (103) der Informationen zur Verbindung mittels eines direkten Kommunikationskanals implementiert wird, der zwischen dem Kommunikationsendgerät und dem zuvor als Zugangspunkt konfigurierten kommunizierenden Objekt aufgebaut wird, wobei das Verfahren **dadurch gekennzeichnet ist, dass** es die folgenden Schritte umfasst, die vor dem Übertragen (103) implementiert werden:
- Senden (301), an das Gateway, einer Netzwerk-Scan-Anforderung;
- Empfangen (302), von dem Gateway, einer Liste mit Netzwerken, die von dem Gateway während des Netzwerkscans detektiert wurden;
- Auswählen (303), innerhalb der Liste, eines Netzwerks, das dem Netzwerk entspricht, das dem als Zugangspunkt konfigurierten kommunizierenden Objekt zugeordnet ist;
- Aufbauen (304) des direkten Kommunikationskanals zwischen dem Kommunikationsendgerät und dem kommunizierenden Objekt durch Verbinden des Kommunikationsendgeräts mit dem ausgewählten Netzwerk.

8. Verfahren nach Anspruch 7, **dadurch gekennzeichnet, dass** die Netzwerk-Scan-Anforderung eine Frequenzbandinformation enthält, die bei dem Netzwerkscan zu verwenden ist.

9. Verfahren nach Anspruch 7, **dadurch gekennzeichnet, dass** es einen Schritt des Identifizierens, innerhalb der Liste mit detektierten Netzwerken, mindestens eines Netzwerks umfasst, dessen Name die Kriterien einer vorbestimmten Namensmaske erfüllt, die in der dedizierten Anwendung gespeichert ist;
und, wenn der Schritt des Identifizierens ein eindeutiges Ergebnis liefert, dass der Schritt des Auswählens das automatische Auswählen des eindeutig identifizierten Netzwerks umfasst.

10. Verfahren nach Anspruch 7, **dadurch gekennzeichnet, dass** die Liste einen den Empfangsleistungspegel angebenden Wert umfasst, der jedem detektierten Netzwerk zugeordnet ist.

11. Verfahren nach Anspruch 10, **dadurch gekennzeichnet, dass** die Schritte des Sendens (301) einer Netzwerk-Scan-Anforderung und des Empfangens (302) einer Liste mit Netzwerken als Antwort auf die Scan-Anforderung mindestens zweimal implementiert werden und dass das Verfahren die folgenden Schritte umfasst:
- Anzeigen, zwischen zwei Iterationen der Schritte des Sendens einer Netzwerk-Scan-Anforderung und des Empfangens einer Liste mit Netzwerken als Antwort auf die Scan-Anforderung, einer Aufforderung, das kommunizierende Objekt von dem Gateway weg oder zu dem Gateway hin zu bewegen;
- Vergleichen, für jedes detektierte Netzwerk, der bei jeder der Iterationen erhaltenen Werte, die den Empfangsleistungspegel angeben;
- automatisches Auswählen oder Hervorheben, auf einer der Anwendung zugeordneten grafischen Schnittstelle, aus der Liste der detektierten Netzwerke, in Abhängigkeit von dem Ergebnis des Vergleichs, eines Netzwerks, das die höchste Wahrscheinlichkeit aufweist, dem von dem als Zugangspunkt konfigurierten kommunizierenden Objekt bereitgestellten Netzwerk zu entsprechen.

12. Verfahren nach Anspruch 7, **dadurch gekennzeichnet, dass** die Schritte des Sendens (301) einer Netzwerk-Scan-Anforderung und des Empfangens (302) einer Liste mit Netzwerken als Antwort auf die Scan-Anforderung mindestens zweimal implementiert werden und dass das Verfahren die folgenden Schritte umfasst:
- Anzeigen, zwischen zwei Iterationen der Schritte des Sendens einer Netzwerk-Scan-Anforderung und des Empfangens einer Liste mit Netzwerken als Antwort auf die Scan-Anforderung, einer Aufforderung, das kommunizierende Objekt in die Zugangspunktkonfiguration umzuschalten;
- Vergleichen der Listen mit Netzwerken, die bei jeder der Iterationen detektiert wurden;
- automatisches Auswählen oder Hervorheben, auf einer der Anwendung zugeordneten grafischen Schnittstelle, aus der Liste der detektierten Netzwerke, in Abhängigkeit von dem Ergebnis des Vergleichs, eines Netzwerks, das die höchste Wahrscheinlichkeit aufweist, dem von dem als Zugangspunkt konfigurierten kommunizierenden Objekt bereitgestellten Netzwerk zu entsprechen.

13. Kommunikationsendgerät zur Implementierung eines Hinzufügens eines kommunizierenden Objekts zu einem drahtlosen lokalen Netzwerk, das durch ein Gateway bereitgestellt wird, wobei das Kommunikationsendgerät **dadurch gekennzeichnet ist, dass** es umfasst:
- Mittel zum Senden, an das Gateway, einer Anforderung zum Erhalten mindestens einer Information zur Verbindung mit dem Netzwerk;
- Mittel zum Empfangen, von dem Gateway, der mindestens einen Information zur Verbindung mit dem Netzwerk;
- Mittel zum Übertragen der mindestens einen Information zur Verbindung mit dem Netzwerk an das kommunizierende Objekt.

14. Gateway (GW) zur Bereitstellung eines drahtlosen lokalen Netzwerks (RES), wobei das Gateway **dadurch gekennzeichnet ist, dass** es einen Satz von Anwendungsprogrammierschnittstellen zur Bereitstellung mindestens eines Dienstes für ein Kommunikationsendgerät umfasst, das auf Anforderung des Kommunikationsendgeräts, anforderndes Endgerät genannt, über das Gateway mit dem Netzwerk verbunden ist, der Satz von Anwendungsprogrammierschnittstellen umfassend:
- eine erste Anwendungsprogrammierschnittstelle (API1) zum Erhalten mindestens einer Information zur Verbindung mit dem Netzwerk (RES) und zum Bereitstellen der Informationen zur Verbindung für das anfordernde Endgerät;
- eine zweite Anwendungsprogrammierschnittstelle (API2) zum Deaktivieren/Reaktivieren mindestens eines Frequenzbandes an dem Gateway;
- eine dritte Anwendungsprogrammierschnittstelle (API3) zum Implementieren eines Netzwerkscans und zum Bereitstellen einer Liste mit während des Netzwerkscans detektierten Netzwerken für das anfordernde Endgerät.

15. Computerprogrammprodukt, das über ein Kommunikationsnetzwerk herunterladbar ist und/oder auf einem computerlesbaren Medium gespeichert ist und/oder von einem Mikroprozessor ausführbar ist, **dadurch gekennzeichnet, dass** es Programmcodeanweisungen zum Ausführen eines Verfahrens nach einem der Ansprüche 1 bis 12 umfasst, wenn es durch einen Prozessor eines Kommunikationsendgeräts ausgeführt wird.

## Claims

1. Method for adding a communicating object (OC) to a wireless local communication network (RES) provided by a gateway (GW), said method being implemented within a dedicated application (APP) executed on a communication terminal (TC) connected to said network via said gateway, said method being **characterized in that** it comprises the following steps:
- sending (101), to said gateway, a request to obtain at least one piece of connection information regarding connection to said network;
- receiving (102), from said gateway, said at least one piece of connection information regarding connection to said network;
- transmitting (103), to said communicating object, said at least one piece of connection information regarding connection to said network.

2. Method according to Claim 1, **characterized in that** it comprises, prior to said transmission (103), a step of sending, to said gateway, at least one request for implementation by said gateway of at least one among a frequency-deactivating operation and a frequency-scanning operation, said request comprising at least one piece of frequency-band information regarding frequency band.

3. Method according to Claim 2, **characterized in that** said request to obtain at least one piece of information regarding connection to the network, said request for implementation of a frequency-deactivating operation, and said request for implementation of a frequency-scanning operation are formatted in accordance with a first, a second and a third application programming interface advertised by said gateway as providing corresponding services to said communication terminal, respectively.

4. Method according to Claim 1, **characterized in that** said transmission (103) is implemented by broadcasting said pieces of connection information, and **in that** said method comprises, prior to said transmission, a step of sending (201), to said gateway, a request to deactivate at least one first frequency band in said gateway, said deactivation resulting in said communication terminal automatically switching to a communication mode using a second frequency band other than said at least one first frequency band deactivated in said gateway, with a view to said broadcast transmission.

5. Method according to Claim 4, **characterized in that** said request to deactivate at least one first frequency band is a request to deactivate at least one among the 5 GHz and 6 GHz frequency bands.

6. Method according to Claim 4, **characterized in that** it comprises, after said transmission, a step of sending (203), to said gateway, a request to reactivate, in said gateway, said at least one first frequency band deactivated previously.

7. Method according to Claim 1, **characterized in that** said transmission (103) of said pieces of connection information is implemented by means of a direct communication channel set up between said communication terminal and said communicating object configured beforehand as an access point, said method being **characterized in that** it comprises the following steps, implemented prior to said transmission (103):
- sending (301), to said gateway, a request for a network scan;
- receiving (302), from said gateway, a list of networks detected by said gateway during said network scan;
- selecting (303), from said list, a network corresponding to the network associated with said communicating object configured as an access point;
- setting up (304) said direct communication channel between said communication terminal and said communicating object, by connecting the communication terminal to said selected network.

8. Method according to Claim 7, **characterized in that** said request for a network scan contains frequency-band information on the frequency band to be used for said network scan.

9. Method according to Claim 7, **characterized in that** it comprises a step of identifying, within said list of detected networks, at least one network the name of which meets the criteria of a predetermined name mask stored in said dedicated application;
and, when said identifying step delivers a single result, said selecting step comprises automatically selecting said singly identified network.

10. Method according to Claim 7, **characterized in that** said list contains a value indicative of reception power level associated with each detected network.

11. Method according to Claim 10, **characterized in that** said steps of sending (301) a request for a network scan and receiving (302) a list of networks in response to said scan request are implemented at least twice, and **in that** the method comprises the following steps:
- displaying, between two iterations of said steps of sending a request for a network scan and of receiving a list of networks in response to said scan request, an invitation to move said communicating object further away from or nearer to said gateway;
- comparing, for each detected network, the values indicative of reception power level obtained in each of said iterations;
- automatically selecting or highlighting within a graphical interface associated with said application, in the list of detected networks, depending on the result of said comparison, a network having the highest probability of corresponding to the network provided by said communicating object configured as an access point.

12. Method according to Claim 7, **characterized in that** said steps of sending (301) a request for a network scan and receiving (302) a list of networks in response to said scan request are implemented at least twice, and **in that** the method comprises the following steps:
- displaying, between two iterations of said steps of sending a request for a network scan and of receiving a list of networks in response to said scan request, an invitation to switch said communicating object to an access-point configuration;
- comparing the lists of networks detected in each of said iterations;
- automatically selecting or highlighting within a graphical interface associated with said application, in the list of detected networks, depending on the result of said comparison, a network having the highest probability of corresponding to the network provided by said communicating object configured as an access point.

13. Communication terminal for implementing an addition of a communicating object to a wireless local network provided by a gateway, said communication terminal being **characterized in that** it comprises:
- means for sending, to said gateway, a request to obtain at least one piece of connection information regarding connection to said network;
- means for receiving, from said gateway, said at least one piece of connection information regarding connection to said network;
- means for transmitting, to said communicating object, said at least one piece of connection information regarding connection to said network.

14. Gateway (GW) for providing a wireless local network (RES), said gateway being **characterized in that** it comprises a set of application programming interfaces for providing at least one service to a communication terminal connected to said network via said gateway, on request by said communication terminal, then called the requesting terminal, said set of application programming interfaces comprising:
- a first application programming interface (API1) for obtaining at least one piece of connection information regarding connection to said network (RES), and for providing said pieces of connection information to said requesting terminal;
- a second application programming interface (API2) for deactivating/reactivating at least one frequency band in said gateway;
- a third application programming interface (API3) for implementing a network scan and for providing to said requesting terminal a list of networks detected during said network scan.

15. Computer program downloadable from a communication network and/or stored on a medium that is readable by computer and/or executable by a microprocessor, **characterized in that** it comprises program code instructions for executing a method according to any of Claims 1 to 12, when it is executed by a processor of a communication terminal.
